# EUROPEAN PATENT SPECIFICATION

(11) **EP 4 443 969 B1**
(45) Date of publication and mention of the grant of the patent: **30.09.2026**
(21) Application number: 24168753.2
(22) Date of filing: 05.04.2024
(51) Int. Cl.: H04W 36/00, H04W 36/06

(54) **METHOD AND APPARATUS FOR SUPPORTING SERVICE CONTINUITY BY CONSIDERING NETWORK SLICE AREA IN A WIRELESS COMMUNICATION SYSTEM**
VERFAHREN UND VORRICHTUNG ZUR UNTERSTÜTZUNG VON DIENSTKONTINUITÄT UNTER BERÜCKSICHTIGUNG DES NETZWERKSCHICHTBEREICHS IN EINEM DRAHTLOSKOMMUNIKATIONSSYSTEM
PROCÉDÉ ET APPAREIL POUR PRENDRE EN CHARGE UNE CONTINUITÉ DE SERVICE EN PRENANT EN COMPTE UNE ZONE DE TRANCHE DE RÉSEAU DANS UN SYSTÈME DE COMMUNICATION SANS FIL

(30) Priority: 06.04.2023 KR 20230045479
(43) Date of publication of application: 09.10.2024
(73) Proprietor: Samsung Electronics Co., Ltd., Suwon-si, Gyeonggi-do 16677 (KR)
(72) Inventor: Suh, Dongeun, Suwon-si, Gyeonggi-do 16677 (KR); Park, Jungshin, Suwon-si, Gyeonggi-do 16677 (KR)
(74) Representative: Gulde & Partner

(56) References cited:
- "3rd Generation Partnership Project; Technical Specification Group Services and System Aspects; System architecture for the 5G System (5GS); Stage 2 (Release 18)", 31 March 2023 (2023-03-31), XP052454774, Retrieved from the Internet <URL:https://ftp.3gpp.org/tsg_sa/WG2_Arch/Latest_SA2_Specs/DRAFT_INTERIM/Archive/23501-i10_CRs_Implemented_rev5.zip 23501-i10_CRs_Implemented_rev5.docx> [retrieved on 20230331]
- "3rd Generation Partnership Project; Technical Specification Group Core Network and Terminals; 5G System; Session Management Services; Stage 3 (Release 16)", 7 July 2020 (2020-07-07), XP051907026, Retrieved from the Internet <URL:https://ftp.3gpp.org/3guInternal/3GPP_ultimate_versions_to_be_transposed/sentToDpc/29502-g40.zip 29502-g40.docx> [retrieved on 20200707]
- SHABNAM SULTANA ET AL: "Support of reduced network slice availability", vol. 3GPP SA 2, no. Athens, GR; 20230220 - 20230224, 10 February 2023 (2023-02-10), XP052236264, Retrieved from the Internet <URL:https://www.3gpp.org/ftp/tsg_sa/WG2_Arch/TSGS2_155_Athens_2023-02/Docs/S2-2302972.zip S2-2302972_was01151r03-eNS_Ph3_KI3_AoS_23501.docx> [retrieved on 20230210]
- DAPENG LI ET AL: "Discussion on RAN3 impact of Support of Network Slices which have Area of Service not matching deployed Tracking Areas", vol. 3GPP RAN 3, no. Athens, GR; 20230227 - 20230303, 17 February 2023 (2023-02-17), XP052244524, Retrieved from the Internet <URL:https://www.3gpp.org/ftp/TSG_RAN/WG3_Iu/TSGR3_119/Docs/R3-230682.zip R3-230682 Discussion on RAN3 impact of Support of Network Slices which have Area of Service not matching deployed Tracking Areas.doc> [retrieved on 20230217]
- GENADI VELEV ET AL: "UP resource deactivation when the UE moves outside the area of slice availability", vol. 3GPP SA 2, no. Goteborg, SE; 20230821 - 20230825, 28 August 2023 (2023-08-28), XP052450764, Retrieved from the Internet <URL:https://www.3gpp.org/ftp/tsg_sa/WG2_Arch/TSGS2_158_Goteborg_2023-08/Docs/S2-2309694.zip S2-2309694_was9521_was8594_23501_eNS_KI#3_Handover_v2.docx> [retrieved on 20230828]

## Description

### [Technical Field]

The disclosure relates generally to the field of communications and to the operations of a terminal and a base station, and more particularly, to a method and an apparatus for supporting service continuity by considering a network slice area in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

3GPP TS 23.501 V18.1.9 (2023-03) discloses partial Network Slice support in a Registration Area wherein, when the User Plane Resources are activated for a PDU session to an S-NSSAI part of a partially allowed NSSAI and the UE moves to a TA which is not part of the list of TAs associated with the S-NSSAI, the User Plane Resources for the PDU session shall be deactivated, but the PDU session context in UE and SMF is not released. Further information is provided in 3GPP TS 29.502 V16.4.0 (2020-07), 3GPP S2-2302972 and 3GPP R3-236802

The above information is presented as background information only to assist with an understanding of the disclosure.

### [Disclosure]

### [Technical Solution]

This disclosure relates to wireless communication networks, and more particularly to a terminal and a communication method thereof in a wireless communication system.

The invention is defined in the claims.

In accordance with an aspect of the disclosure, an embodiment provides a method performed by a base station in a wireless communication system. A protocol data unit (PDU) session associated with a network slice is identified, based on first information on availability of the network slice. Deactivation of a user plane (UP) resource for the PDU session is performed, in case that a UE moves from a first cell inside a network slice area of service (NS-AoS) to a second cell outside of the NS-AoS, and the UP resource is active for the PDU session. Second information for requesting the deactivation of the UP resource is transmitted to an access and mobility management function (AMF) entity.

### [Advantageous Effects]

Aspects of the disclosure are to address at least the above-mentioned problems and/or disadvantages and to provide at least the advantages described below. Accordingly, an aspect of the disclosure is to provide efficient communication methods in a wireless communication system.

### [Description of Drawings]

The above and other aspects, features, and advantages of certain embodiments of the disclosure will be more apparent from the following description taken in conjunction with the accompanying drawings, in which:
FIG. 1 is a diagram illustrating a communication network including core network (CN) entities in a wireless communication system, according to an embodiment;
FIG. 2 is a diagram illustrating a wireless environment including a CN in a wireless communication system, according to an embodiment;
FIG. 3 is a diagram illustrating a method of notifying a session management function (SMF) of a PDU session to be rejected by a target radio access network (T-RAN), based on a slice-available area in a handover procedure, according to an embodiment;
FIG. 4 is a diagram illustrating a method in which an AMF processes a PDU session by considering a network slice area of service (NS AoS) in a registration procedure, according to an embodiment;
FIG. 5 is a diagram illustrating a method in which a base station processes a PDU session by considering slice-available area information and notifies the AMF of the same in a PDU session modification procedure, according to an embodiment;
FIG. 6 is a block diagram illustrating the structure of a terminal, according to an embodiment;
FIG. 7 is a block diagram illustrating the structure of a base station, according to an embodiment; and
FIG. 8 is a block diagram illustrating the structure of a network entity, according to an embodiment.

### [Best Mode]

Embodiments provide a method for supporting a network slice area in a wireless communication system, and a method and an apparatus for supporting service continuity when a terminal moves outside a network slice area in a corresponding environment.

A method according to an embodiment includes receiving a first control signal transmitted from a base station, processing the received first control signal, and transmitting a second control signal generated based on the processing to the base station.

An embodiment provides an apparatus and a method capable of effectively providing services in a wireless communication system.

An embodiment provides a method performed by a base station in a wireless communication system. A protocol data unit (PDU) session associated with a network slice is identified, based on first information on availability of the network slice. Deactivation of a user plane (UP) resource for the PDU session is performed, in case that a UE moves from a first cell inside a network slice area of service (NS-AoS) to a second cell outside of the NS-AoS, and the UP resource is active for the PDU session. Second information for requesting the deactivation of the UP resource is transmitted to an access and mobility management function (AMF) entity.

An embodiment provides a method performed by an AMF entity in a wireless communication system. First information requesting deactivation of a UP resource is received by a base station. A PDU session associated with a network slice is based on second information on availability of the network slice. The UP resource for the PDU session is deactivated in case that a UE moves from a first cell inside a NS-AoS to a second cell outside of the NS-AoS, and the UP resource is active for the PDU session.

An embodiment provides a base station in a wireless communication system. The base station includes a transceiver and at least one processor coupled with the transceiver. The at least one processor is configured to identify a PDU session associated with a network slice, based on first information on availability of the network slice. The at least one processor is also configured to perform deactivation of a UP resource for the PDU session, in case that a UE moves from a first cell inside a NS-AoS to a second cell outside of the NS-AoS, and the UP resource is active for the PDU session. The at least one processor is further configured to transmit, to an AMF entity, second information for requesting the deactivation of the UP resource.

An embodiment provides an AMF entity in a wireless communication system. The AMF entity includes a transceiver and at least one processor coupled with the transceiver. The at least one processor is configured to receive, from a base station, information requesting deactivation of a UP resource. A PDU session associated with a network slice is based on other information on availability of the network slice. The UP resource for the PDU session is deactivated in case that a UE moves from a first cell inside a NS-AoS to a second cell outside of the NS-AoS, and the UP resource is active for the PDU session.

### [Mode for Invention]

Hereinafter, the operation principle of the disclosure will be described in detail with reference to the accompanying drawings. In the following description, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). In some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a software element or a hardware element, such as a field programmable gate array (FPGA) or an application specific integrated circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In describing the disclosure below, a detailed description of known functions or configurations incorporated herein will be omitted when it is determined that the description may make the subject matter of the disclosure unnecessarily unclear. Hereinafter, embodiments will be described with reference to the accompanying drawings.

Herein, terms referring to network entities or network functions or entities of edge computing systems, terms referring to messages, terms referring to identification information, and the like are illustratively used for the sake of descriptive convenience. Therefore, the disclosure is not limited by the terms as used below, and other terms referring to subjects having equivalent technical meanings may be used.

In the following description, the disclosure will be described using terms and names defined in the LTE and NR standards, which are the latest standards specified by the 3rd generation partnership project (3GPP) group among the existing communication standards, for the sake of descriptive convenience. However, the disclosure is not limited by these terms and names, and may be applied in the same way to systems that conform other standards. In particular, the disclosure may be applied to the 3GPP NR (5G mobile communication standards). In addition, embodiments may also be applied to other communication systems having similar technical backgrounds or channel types. Furthermore, based on determinations by those skilled in the art, the embodiments may also be applied to other communication systems through some modifications without significantly departing from the scope of the disclosure.

The 5G mobile communication network may include a 5G UE, a 5G radio access network (RAN), and a 5G CN. The 5G CN may be configured by network functions (NFs) such as, an access and mobility management function (AMF) which provides a mobility management function of the UE, an SMF which provides an SMF, a user plane function (UPF) which performs a role of data transmission, a policy control function (PCF) which provides a function of policy control, a unified data management (UDM) which provides a function of managing data such as subscriber data and policy control data, and a unified data repository (UDR) which stores data of various network functions such as the UDM.

Network slicing technology in the 5G system is a technology that can provide multiple virtualized and independent logical networks in one physical network. In order to satisfy the specialized requirements of services/applications, network operators may provide services by configuring a virtual end-to-end network called a network slice. A third party for providing a specific service (e.g., an application service provider) may contract with a network operator for one or more network slices, and allow traffic between terminals and servers for a specific application to be transmitted and/or received over the contracted slice(s). Network slices may be distinguished by an identifier called single-network slice selection assistance information (S-NSSAI), and the network may support the S-NSSAI in units of a tracking area (TA). The TA refers to a set of cells, and all cells may be associated with the TA. The identifier of the TA (e.g., tracking area identity (TAI)) may be configured by a mobile country code (MCC), a mobile network code (MNC), and a tracking area code (TAC). For example, support for S-NSSAI1 in TA1 may signify that all cells belonging in TA1 support S-NSSAI1, and this may signify that all cells belonging in TA1 are in a state where resource allocation for S-NSSAI1 is possible. The 5G system may enforce the S-NSSAI not to be used outside an area in which the S-NSSAI is supported.

The service area of S-NSSAI (e.g., NS-AoS) may be defined separately from the area in which S-NSSAI is supported (e.g., supported area). Here, NS-AoS is area information that may be configured by cell identifier(s) (or TA identifier(s)) and may indicate an area in which the UE may access a specific network slice and receive service therefrom.

Meanwhile, a network operator may wish to provide slice services in smaller units than a TA, and to this end, a method to support slice service areas of cell units in the network may be needed. For example, when NS-AoS for S-NSSAI consists of some cells in a TA, the network may allocate resources for the corresponding S-NSSAI only for the cells that fall within the NS-AoS (e.g., some cells in the TA), and for other cells (e.g., other cells within the TA), may not allocate resources for the S-NSSAI or may allocate only minimal resources.

For example, in a situation where TA1 includes cell1, cell2, cell3, and cell4, and TA1 supports S-NSSAI1, when NS-AoS of S-NSSAI1 is configured as cell1 and cell2, the 5G system should be able to allow usage for S-NSSAI1 only when accessed through cell1 and cell2, and restrict usage for S-NSSAI1 when accessed through cells outside the NS-AoS for S-NSSAI1 (e.g., cell3 and cell4). In addition, when a terminal that has established a session for S-NSSAI and is transmitting and/or receiving data moves to a cell (e.g., cell2 or cell3) that does not support the S-NSSAI, a method of supporting session continuity may be required.

Embodiments propose a method of supporting a network slice service area of cell units (e.g., NS-AoS) in a wireless communication system.

Specifically, embodiments propose a method in which an AMF obtains network slice location availability information (e.g., geographic information corresponding to a slice-specific network slice area of service, which may include a set of S-NSSAIs and TACs corresponding thereto, a set of TAIs, or a set of Cell IDs) from a base station.

Further, embodiments propose a method in which a network slice selection function (NSSF) obtains network slice location availability information (e.g., S-NSSAI location availability information) from AMFs.

Furthermore, the disclosure may propose a method in which a base station and an AMF perform slice access control for a terminal by utilizing S-NSSAI location availability information (e.g., when the terminal moves outside of the slice area, the AMF may be notified of the same after a session is released or deactivated).

In addition, the disclosure proposes, when the S-NSSAI of a session being used becomes unavailable due to movement of the terminal, a method of enabling a terminal to access an alternative slice for service continuity.

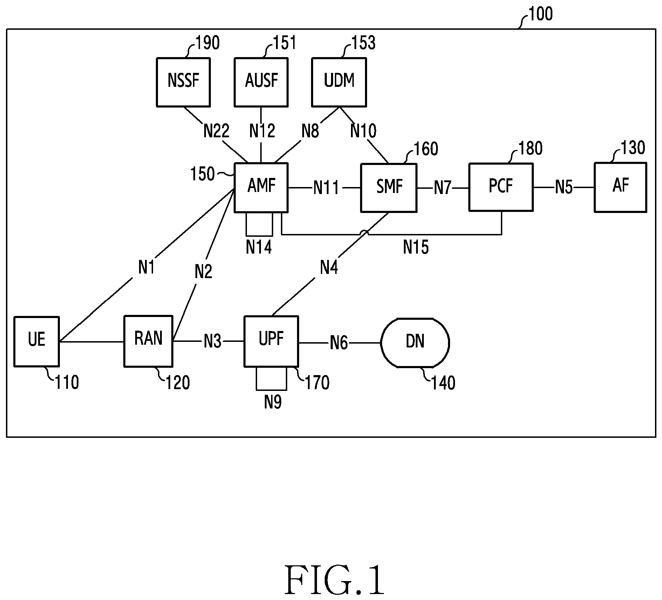

FIG. 1 is a diagram illustrating a communication network including CN entities in a wireless communication system, according to an embodiment.

A 5G mobile communication network may include a 5G UE (or terminal), a 5G ran access network (RAN) (or base station, or g nodeB (gNB), or evolved nodeB (eNB)), and a 5G CN. The 5G CN may include network functions such as, for example, an AMF 150 which provides a mobility management function of the UE, an SMF 160 which provides a session management function, a UPF 170 which delivers data, a PCF 180 which provides a function of policy control, a UDM 153 which provides a function of managing data such as subscriber data or policy control data, or a UDR, which stores data of various network functions.

Referring to FIG. 1, a UE 110 may perform communication over a radio channel formed with a base station (e.g., an eNB or a gNB), that is, over an access network. In some embodiments, the UE 110 is a device used by a user, and may be configured to provide a user interface (UI). For example, the UE 110 may be a terminal equipped in a vehicle for driving. In some other embodiments, the UE 110 may be a device for performing machine type communication (MTC) operated without user's involvement, or an autonomous vehicle. Besides an electronic device, the UE may be referred to as a 'terminal', a 'vehicle terminal', a 'UE', a 'mobile station', a 'subscriber station', a 'remote terminal', a 'wireless terminal', or a 'user device' or other term having the equivalent technical meaning. As the terminal, a customer-premises equipment (CPE) or a dongle type terminal may be used besides the UE. The CPE is connected to an NG-RAN node like the UE, and may provide the network to other communication equipment (e.g., a laptop).

Referring to FIG. 1, the AMF 150 provides a function for access and mobility management based on the UE 110, and each UE 110 may be basically connected to one AMF 150. Specifically, the AMF 150 may perform at least one function of signaling between CN nodes for mobility of 3GPP access networks, an interface (N2 interface) between radio access networks (e.g., the 5G RAN) 120, NAS signaling with the UE 110, identifying the SMF 160, and delivering a session management (SM) message between the UE 110 and the SMF 160. Some or all of the functions of the AMF 150 may be supported within a single instance of one AMF 150.

Referring to FIG. 1, the SMF 160 provides the SMF. When the UE 110 has a plurality of sessions, respective sessions may be managed by different SMFs 160. Specifically, the SMF 160 may perform at least one function of session management (e.g., session establishment, modification and release including tunnel maintenance between the UPF 170 and the access network node), UPF selection and control, traffic steering configuration for routing traffic from the UPF 170 to a proper destination, termination of the SM part of the NAS message, downlink data notification (DDN), and an initiator of AN-specific SM information (e.g., deliver to the access network through the N2 interface via the AMF 150). Some or all functions of the SMF 160 may be supported within a single instance of one SMF 160.

In the 3GPP system, conceptual links interconnecting NFs within the 5G system may be referred to as reference points. The reference point may be referred to as an interface. The following illustrates reference points (hereafter, interchangeably used with the interfaces) included in the 5G system architecture herein;
N1: a reference point between the UE 110 and the AMF 150
N2: a reference point between the (R)AN 120 and the AMF 150
N3: a reference point between the (R)AN 120 and the UPF 170
N4: a reference point between the SMF 160 and the UPF 170
N5: a reference point between the PCF 180 and the AF 130
N6: a reference point between the UPF 170 and the DN 140
N7: a reference point between the SMF 160 and the PCF 180
N8: a reference point between the UDM 153 and the AMF 150
N9: a reference point between two core UPFs 170
N10: a reference point between the UDM 153 and the SMF 160
N11: a reference point between the AMF 150 and the SMF 160
N12: a reference point between the AMF 150 and an authentication server function (AUSF) 151
N13: a reference point between the UDM 153 and the AUSF 151
N14: a reference point between two AMFs 150
N15: a reference point between the PCF 180 and the AMF 150 in a non-roaming scenario, a reference point between the PCF 180 and the AMF 150 within a visited network in a roaming scenario

In the 5G system, network slicing refers to a technology and structure that enables multiple virtualized, independent logical networks in one physical network. In order to satisfy the specialized requirements of services/applications, network operators can provide services by configuring a virtual end-to-end network called a network slice. Here, the network slice may be distinguished by an identifier called S-NSSAI. The network transmits a set of allowed slices (e.g., allowed NSSAI(s)) to the UE in a UE registration procedure (e.g., UE registration procedure), and the UE may transmit and receive application data via a protocol data unit (PDU) session generated over one of the S-NSSAI(s) (e.g., network slice).

When an alternative network slice selected to replace a network slice of an existing PDU session is determined as a slice that has already reached the maximum number of sessions, the establishment of a PDU session to the alternative network slice to replace the existing PDU session slice is rejected and the continuity of the application traffic is not guaranteed. Accordingly, an embodiment provides a method to address this problem.

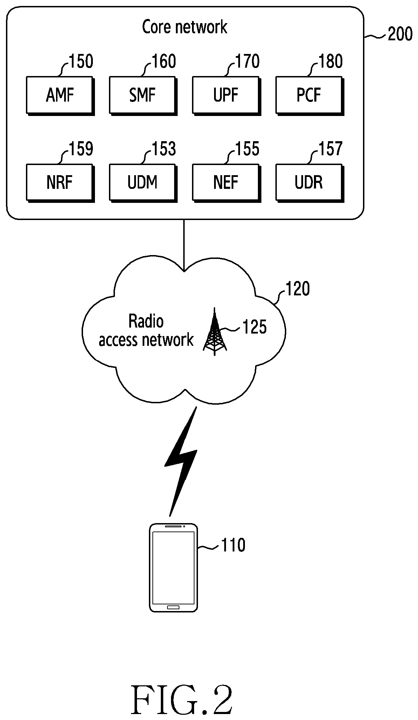

FIG. 2 is a diagram illustrating a wireless environment including a CN in a wireless communication system, according to an embodiment.

Referring to FIG. 2, the wireless communication system may include a RAN 120 and a CN. The RAN 120 is a network directly connected to a user device, for example, the UE 110, and may be an infrastructure which provides radio access to the UE 110. The RAN 120 may include a set of base stations including a base station 125, and the plurality of the base stations may perform communication via interfaces established between them. At least some of the interfaces between the plurality of the base stations may be wired or wireless. The base station 125 may have a structure divided into a central unit (CU) and a distributed unit (DU). In this case, a single CU may control a plurality of DUs. The base station 125 may be referred to as, in addition to the base station, an 'AP', a 'gNB', a '5G node', a 'wireless point', a 'transmission/reception point (TRP)', or other term having the equivalent technical meaning. The UE 110 accesses the RAN 120, and may perform communication with the base station 125 over a wireless channel. The UE 110 may be referred to as, in addition to the terminal, a 'UE', a mobile station', a 'subscriber station', a 'remote terminal', a 'wireless terminal', a 'user device' or other term having the equivalent technical meaning.

The CN, which is a network for managing the whole system, may control the RAN 120 and process data and control signals of the UE 110 transmitted or received over the RAN 120. The CN may perform various functions such as controlling the user plane and the control plane, processing mobility, managing subscriber information, charging, and interworking with systems of other types (e.g., the long-term evolution (LTE) system). To carry out the described various functions, the CN may include a plurality of entities functionally separated with different NFs. For example, the CN 200 may include the AMF 150, the SMF 160, the UPF 170, the PCF 180, a NRF 159, the UDM 153, a NEF 155, and a UDR 157.

The UE 110 may be connected to the RAN 120 to access the AMF 150 which performs the mobility management function of the CN. The AMF 150 may be a function or a device which manages both the access of the RAN 120 and the mobility management of the UE 110. The SMF 160 is an NF which manages the session. The AMF 150 may be connected to the SMF 160, and the AMF 150 may route a session-related message of the UE 110 to the SMF 160. The SMF 160 may be connected to the UPF 170 to allocate a user plane resource to be provided to the UE 110, and to establish a tunnel for transmitting data between the base station 125 and the UPF 170. The PCF 180 may control policy and charging-related information of a session used by the UE 110.

The NRF 159 may perform a function of storing information of NFs installed in the mobile communication provider network, and notifying of the stored information. The NRF 159 may be connected to all of the NFs. The NFs each, when initiating its driving in the provider network, may register at the NRF 159 and thus notify the NRF 159 that the corresponding NF is operating in the network. The UDM 153 is an NF of performing a similar role to a home subscriber server (HSS) of the 4G network, and may store subscription information of the UE 110, or context used by the UE 110 in the network.

The NEF 155 may connect a 3rd party server and the NF in the 5G mobile communication system. In addition, the NEF 155 may provide data to the UDR 157, or update or acquire data. The UDR 157 may store the subscription information of the UE 110, store the policy information, store data exposed to outside, or store necessary information of a 3rd party application. In addition, the UDR 157 may provide the stored data to other NF.

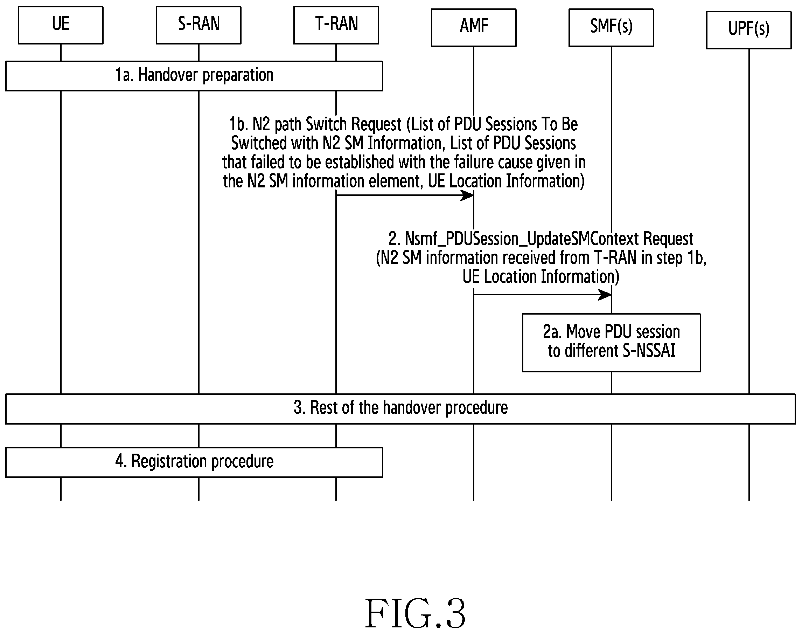

FIG. 3 is a diagram illustrating a method of notifying a SMF of a PDU session to be rejected by a T-RAN, based on slice-available area (e.g., NS AoS or S-NSSAI location availability) in a handover procedure, according to an embodiment.

In operation 1a, signaling for preparation for handover among a UE, a source RAN (S-RAN), and a T-RAN may be performed. A handover may occur in situations such as a change in radio conditions, load balancing, or support of a specific service. In a handover preparation process, the S-RAN may transmit information about the UE (e.g., UE radio capability ID) to the T-RAN.

In operation 1b, the T-RAN may transmit an N2 path switch request message to the AMF to notify that the UE has moved to the target cell. The N2 path switch request message may include at least one of the following pieces of information:
- List of consisting of PDU sessions that need to be switched and N2 SM information for each PDU session (List of PDU sessions to be switched with N2 SM Information):
   Information about PDU session(s) that have been determined to be switched may be included.

For each PDU session, at least one of PDU session ID (e.g., a PDU session identifier), AN tunnel info (e.g., tunnel address information through which data may be received from a T-RAN for a PDU session corresponding to a PDU session identifier), or list of QoS flows to be activated may be included. The PDU session ID and AN tunnel info may be included in the N2 SM information (e.g., information transmitted to the SMF via the AMF).
- A list consisting of PDU sessions that failed to be established and each cause of failure, which are provided in the N2 SM information element (list of PDU sessions that failed to be established with the failure cause given in the N2 SM information element):
   Information about the PDU session(s) that have been rejected by the T-RAN and information indicating the cause for the rejection may be included.

For each PDU session, a path switch request setup failed transfer including a PDU session ID and cause IE may be included.

In case of storing, as configuration information, the S-NSSAI information supported for a current TA of the UE, the target NG-RAN may identify whether, among PDU sessions for the UE, there is a PDU session having S-NSSAI that is not supported by a current TA of the UE.

When there exists a PDU session with an S-NSSAI that is not supported among the PDU sessions for the UE, the T-RAN may include cause IE configured as slice(s) not supported and a PDU session ID corresponding to list of PDU sessions that failed to be established with the failure cause given in the N2 SM information element.

For PDU sessions with cause IE configured as slice(s) not supported, the T-RAN may include other S-NSSAI information (e.g., backup S-NSSAI) supported by the current TA in a message which is transmitted to the AMF.

The target NG-RAN may store, as a configuration value, at least one of cell identifier(s) (e.g., NG-RAN cell global identifier (CGI)) or TA identifier(s) (e.g., TAC) available for each S-NSSAI. The NG-RAN may perform configurations for at least one of the cell identifier(s) (e.g., CGI) or TA identifier(s) (e.g., TAC) available for each S-NSSAI based on information received from the AMF or OAM.

When the available S-NSSAI information for the current cell (e.g., the target cell) of the UE is stored as configuration information, the target NG-RAN may identify whether there exists a PDU session having S-NSSAIs that are not available for the current cell of the UE.

When there exists a PDU session for which the S-NSSAI is not available among the PDU sessions for the UE, the T-RAN may include a PDU session ID corresponding to a list of PDU sessions that failed to be established with the failure cause given in the N2 SM information element and a cause IE for the PDU session.

In this case, the cause IE may indicate at least one of the following: slice(s) not available, and slice(s) not within area of service of slice(s).

For PDU sessions with cause IE configured as slice(s) not available or not within area of service of slice(s), the T-RAN may include other S-NSSAI information available in the current cell (e.g., backup S-NSSAI) in a message which is transmitted to the AMF.
- UE location information: this may indicate the location information of the UE. The UE location information may include the cell ID or TA identifier.

In operation 2, the AMF may include the information received from the T-RAN in a message which is transmitted to the SMF.

In operation 2a, the SMF may determine to generate an UP path for the PDU sessions included in the list of PDU sessions to be switched with N2 SM information included in the message received from the AMF. In addition, the SMF may also determine whether to continue to use the existing UPF for the PDU sessions included in the list of PDU sessions to be switched with N2 SM information.

For PDU sessions included in the list of PDU sessions that failed to be established with the failure cause given in the N2 SM information element, the SMF may identify that, when cause IE indicates slice(s) not available or not within area of slice(s), the S-NSSAI corresponding to the PDU session is supported by the current cell, but is not configured as an available S-NSSAI in the current cell (e.g., not a cell included in the NS AoS). In addition, the SMF may determine that the PDU sessions included in the list of PDU sessions that failed to be established with the failure cause given in the N2 SM information element should be deactivated, rather than released.

For PDU sessions with cause IE configured as slice(s) not supported, or slice(s) not available or not within area of slice(s), the SMF may transmit, to the UE, a message requesting to generate a PDU session via another S-NSSAI (e.g., backup S-NSSAI).

In this case, when the information received from the AMF includes an alternative S-NSSAI for the PDU session included in the list of PDU sessions that failed to be established with the failure cause given in the N2 SM information element, the SMF may include the alternative S-NSSAI in the message transmitted to the UE. When the information received from the AMF does not include the alternative S-NSSAI, the SMF may determine an S-NSSAI to be transmitted to the UE, based on the configuration information or by its own determination.

Specifically, the SMF may include, in an N1 message which is a message transmitted to a UE (e.g., a message transmitted to a UE), at least one of a PDU session ID, an S-NSSAI, or information indicating to transmit a PDU session establishment request to the same data network.

The SMF may transmit, to the AMF, an N1 message (e.g., a message transmitted to the UE) and an N2 message (e.g., a message transmitted to the T-RAN). The AMF may transmit the N2 message including the N1 message to the T-RAN based on the information received from the SMF. The T-RAN may transmit, to the UE, the N1 message included within the N2 message received from the AMF.

Upon receiving the N1 message, the UE may transmit a PDU session establishment request message to the AMF through the T-RAN. The PDU session establishment request message may include at least one of the same DNN for the PDU session ID included in the N1 message or the S-NSSAI included in the N1 message.

In operation 3, the remaining handover procedure may be performed. The remaining handover procedure may include the same or similar procedures as the handover procedure in an existing LTE communication system or 5G communication system. However, the remaining handover procedure may be organically combined with the procedures of operations 1a and 2a described above, and may further include new operations other than the existing handover procedure.

In operation 4, a registration procedure through the T-RAN may be performed.

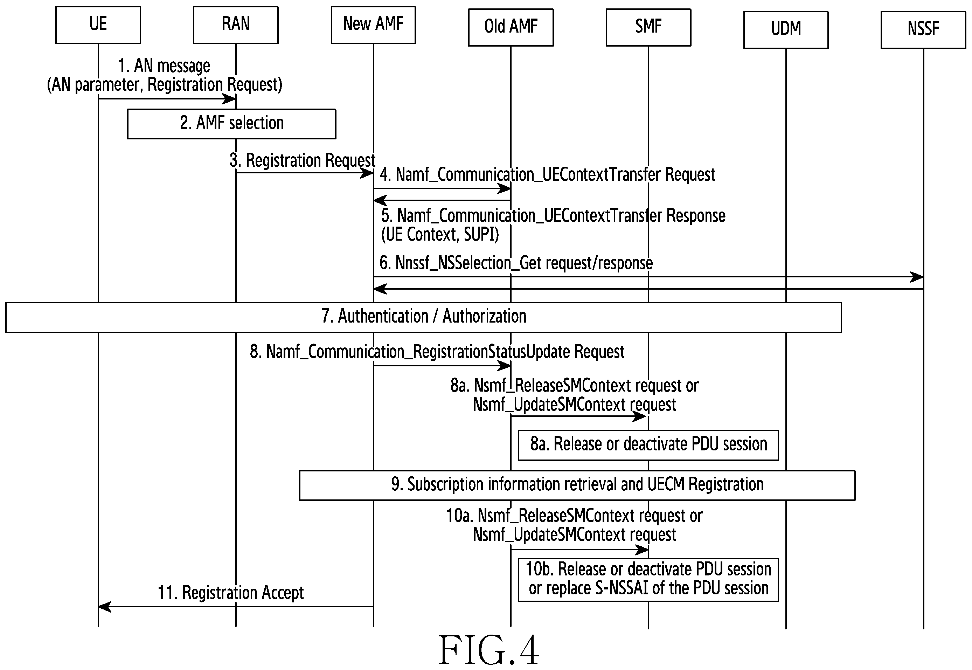

FIG. 4 is a diagram illustrating a method in which an AMF processes a PDU session by considering an NS AoS in a registration procedure, according to an embodiment.

Referring to FIG. 4, in operation 1, a terminal (UE) may transmit an AN message (e.g., at least one of a registration request or AN parameters) to a base station (RAN). The registration request message may include at least one of a UE identifier (e.g., including at least one of a subscription concealed identifier (SUCI), a 5G-globally unique temporary identity (5G-GUTI), or a permanent equipment identifier (PEI)), a registration type, a requested NSSAI, a UE mobility management (MM) CN capability, or a list of PDU sessions to be activated.

In case of providing a function of capable of performing slice access control based on slice-available area information and the location of a UE (e.g., cell ID), the UE may include, in a UE MM CN capability of the registration request message, information indicating support for a function of capable of performing slice access control on the slice available-area information of the UE.

In operation 2, the RAN may select an AMF based on the information in the AN message received from the UE.

In operation 3, the RAN may transfer an N2 message (e.g., at least one of a registration request or N2 parameters) to the AMF. The N2 parameter may include at least one of the selected PLMN ID, UE location information (e.g., Location Information and Cell ID (e.g., NG-RAN CGI) associated with a cell on which the UE is camping), or a UE context request. In this case, the N2 message may include the RAN ID.

However, when a previous AMF of the UE does not exist (e.g., when the registration request is an initial registration request), operations 4 and 5 may be skipped.

In operation 4, when the AMF has changed, an AMF after the change (hereinafter referred to as a new AMF) may identify an AMF before the change (hereinafter referred to as an old AMF) for the UE, based on the 5G-GUTI included in the information received in operation 3. The new AMF may transmit a Namf_Communication_UEContextTransfer Request message to the old AMF. The Namf_Communication_UEContextTransfer Request message may include at least one of an access type of the UE, an identifier of the UE (e.g., 5G-GUTI or SUPI), or supported features.

In operation 5, when the old AMF receives the Namf_Communication_UEContextTransfer Request message of operation 4, the old AMF may include at least one of a UE context or SUPI for the UE identifier included in the received message in a response message transmitted to the new AMF.

According to an embodiment, the UE context information transmitted by the old AMF to the new AMF may include S-NSSAI-specific slice-available area information for the UE. The S-NSSAI-specific slice-available area information (e.g., at least one of NS-AoS or S-NSSAI location availability information) may include area information capable of using a specific S-NSSAI. The UE context information may also include a cell identifier (e.g., NG-RAN CGI) or a TA identifier (e.g., at least one of TAI or TAC).

According to an embodiment, the UE context information transmitted by the old AMF to the new AMF may include whether the UE supports slice-available area information.

In operation 6, the new AMF may request slice-available area information (e.g., including at least one of NS-AoS or S-NSSAI location availability information) from the NSSF. In response to the request for slice-available area information, the NSSF may receive, from the new AMF, slice-available area information that includes at least one of NS-AoS or S-NSSAI location availability information. When the information received from the old AMF does not include the slice-available area information, operation 6 may be performed based on configuration information or performed by the OAM (Operations, Administration and Maintenance). In this case, the new AMF may include the S-NSSAI and an indicator requesting the slice-available area information in a message requested to the NSSF. When the message received from the new AMF includes the indicator requesting the slice-available area information, the NSSF may include, in the message transmitted to the new AMF, the S-NSSAI-specific slice-available area information with respect to the S-NSSAI(s) included in the message received from the new AMF.

In operation 7, an authentication/authorization procedure for the UE may be performed. The AMF may perform the authentication/authorization procedure for the UE via the AUSF.

In case of receiving a UE context from the old AMF in operation 5, the new AMF may transmit a message to notify of the registration state for the received UE context to the old AMF in operation 8. In case that, among PDU session ID(s) included in the UE context, there exist PDU sessions that the new AMF cannot support or that need to be notified to the old AMF (e.g., when the network slice-available area information of the S-NSSAI is configured and the current cell is not included in the network slice-available area), the new AMF may transmit a Namf_Communication_RegistrationStatusUpdate message to the old AMF.

The Namf_Communication_RegistrationStatusUpdate message may include at least one of the following pieces of information:
- PDU session ID(s) to be released due to NS-AoS: When, among the PDU sessions included in a UE context, there exists a PDU session for which the slice-available area information of the S-NSSAI is configured and in which a cell in which the UE is currently located is not included in the available area of a relevant S-NSSAI, and the new AMF has determined to release the PDU session(s) in which a cell in which the UE is currently located is not included in the available area of the relevant S-NSSAI, the Namf_Communication_RegistrationStatusUpdate message may include the PDU session ID(s) of the PDU session(s) in which the current cell is not included in the slice-available area. The Namf_Communication_RegistrationStatusUpdate message may include cause information indicating that the release occurs due to slice-available area information (e.g., NS-AoS).
- PDU session ID(s) to be deactivated due to NS-AoS: When, among the PDU sessions included in a UE context, there exists a PDU session for which the slice-available area information of the S-NSSAI is configured and in which a current cell is not included in the slice-available area, and the new AMF has determined to deactivate the PDU session(s) that are not included in the slice-available area, the Namf_Communication_RegistrationStatusUpdate message may include the PDU session ID(s) of the PDU session(s) that are not included in the slice-available area. The Namf_Communication_RegistrationStatusUpdate message may also include cause information indicating that the deactivation occurs due to slice-available area information (e.g., NS-AoS).

When the message received from the new AMF in operation 7 includes PDU session ID(s) to be released due to NS-AoS, the old AMF may transmit an Nsmf_ReleaseSMContext request (PDU Session ID) to the SMF in charge of each PDU session in order to releases PDU session(s) that are not included in the slice-available area in operation 8a. The SMF may perform PDU session release for the PDU session ID included in the received message.

When the message received from the new AMF in operation 7 includes PDU session ID(s) to be released due to NS-AoS, the old AMF may transmit an Nsmf_ReleaseSMContext request (PDU session ID, operation type (deactivation)) to the SMF in charge of each PDU session in order to releases PDU session(s) that are not included in the slice-available area. The SMF may, when the received message indicates deactivation as the operation type, perform UP deactivation for the included PDU session ID.

In operation 9, the new AMF may acquire subscriber information about the UE from the UDM. The new AMF may also register the access type with the UDM.

In operation 10a, when the registration request received in operation 3 includes a list of PDU sessions to be activated, and when, among PDU session ID(s) included in list of PDU sessions to be activated, there exists a PDU session for which the network slice-available area information of the S-NSSAI is configured in the new AMF and in which a current cell ID is not included in the slice-available area, the new AMF may transmit a request for releasing the PDU session not included in the slice-available area to the SMF in charge. Alternatively, the new AMF may transmit a request for deactivating a PDU session that is not included in the slice-available area to the SMF in charge. Alternatively, the new AMF may transmit, to the SMF in charge, a message for requesting a slice change (e.g., slice replacement) on an alternative S-NSSAI for a PDU session that is not included in the slice-available area. The AMF may transmit a slice replacement request message in order to provide continuity of the PDU session to enable the use of a PDU session with a different S-NSSAI for the corresponding PDU session.

The release request message (e.g., Nsmf_ReleaseSMContext request) may include at least one of PDU session ID(s) or SM context ID(s).

The deactivate request message (e.g., Nsmf_UpdateSMContext request) may include at least one of PDU session ID(s) or operation type (e.g., deactivation).

The slice replacement request message (e.g., Nsmf_UpdateSMContext request) may include at least one of the PDU session ID or SM context ID for the specific PDU session, the existing S-NSSAI (e.g., S-NSSAI for the PDU session), and an alternative S-NSSAI (e.g., Alternative S-NSSAI).

The new AMF may determine, based on the configuration information, whether to transmit a message requesting release, a message requesting deactivation, or a message requesting slice replacement for a PDU session for which the network slice-available area information of a specific S-NSSAI is configured in the new AMF and in which a current cell ID is not included in the network slice-available area, among PDU session ID(s) included in the list of PDU sessions to be activated.

Upon receiving the Nsmf_ReleaseSMContext message in operation 10a, the SMF may perform a PDU session release for the PDU session ID included in the Nsmf_ReleaseSMContext message in operation 10b.

When the Nsmf_UpdateSmContext message has been received in operation 10a, and the operation type of the Nsmf_UpdateSmContext message indicates deactivation, the SMF may perform UP deactivation for the PDU session ID included in the Nsmf_UpdateSmContext message.

When the Nsmf_UpdateSmContext message has been received in operation 10a and the Nsmf_UpdateSmContext message includes an S-NSSAI and an alternative S-NSSAI, the SMF may perform a slice replacement on the alternative S-NSSAI for the PDU session ID included in the Nsmf_UpdateSmContext message. Specifically, the SMF may include the alternative S-NSSAI in the message transmitted to the UE. When the information received from the AMF includes the alternative S-NSSAI, the SMF may include, in the N1 message (e.g., the message transmitted to the UE), at least one of the PDU session ID, the alternative S-NSSAI (e.g., the alternative S-NSSAI included in the message received from the AMF), or information indicating to transmit a PDU session establishment request to the same data network. The SMF may transmit, to the AMF, a corresponding N1 message (e.g., a message transmitted to the UE) and N2 message (e.g., a message transmitted to the T-RAN). Based on the information received from the SMF, the AMF may transmit the N2 message including the N1 message to the T-RAN. The T-RAN may transmit the N1 message included in the N2 message received from the AMF to the UE. Upon receiving the N1 message from the T-RAN, the UE may transmit a PDU session establishment request message to the AMF through the T-RAN. The PDU session establishment request message may include at least one of the same DNN for the PDU session ID included in the N1 message or the alternative S-NSSAI included in the N1 message.

In operation 11, the new AMF may transmit a registration accept message to the UE. The registration accept message may be transferred to the UE through the RAN.

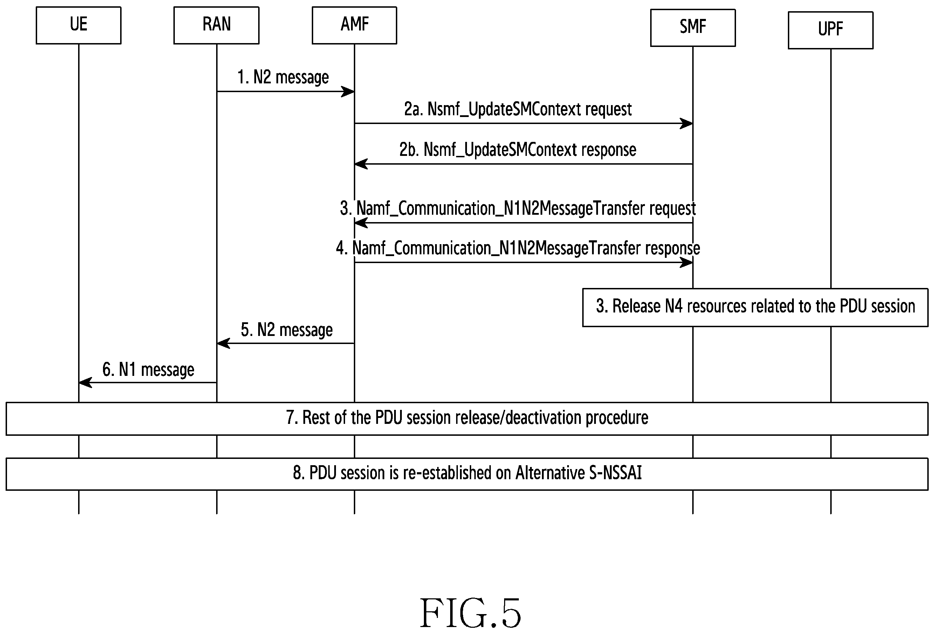

FIG. 5 is a diagram illustrating a method in which a base station processes a PDU session by considering slice-available area information and notifies the AMF of the same in a PDU session modification procedure, according to an embodiment.

Referring to FIG. 5, when the RAN stores, as configuration information, S-NSSAI-specific slice-available area information (e.g., which may consist of a cell identifier or TA identifier, and may be referred to as NS AoS or S-NSSAI location availability information), the RAN may identify slice information that is capable of being supported in a cell based on the S-NSSAI-specific slice-available area information (e.g., when the slice-available area information includes a cell identifier, the S-NSSAI is available in a cell indicated by the cell identifier).

In operation 1, when, among UEs the RAN is in charge, there exists a UE with a PDU session for S-NSSAI that is not available in a serving cell (e.g., a cell in which the UE is currently located), the RAN may perform at least one of the following operations:
The RAN may transmit, to the AMF, an N2 message requesting release of the PDU session(s) for the S-NSSAI not available in the serving cell. The N2 message requesting the release may be transmitted after the RAN releases the PDU session(s) for the S-NSSAI that are not available in the serving cell. The N2 message may include at least one of the PDU session ID(s), a PDU session release indicator, or a cause indicating slice unavailability according to configuration information.

The RAN may transmit, to the AMF, an N2 message requesting to deactivate a resource for the PDU session(s) for the S-NSSAI that are not available in the serving cell. The N2 message requesting resource deactivation may be transmitted after resource deactivation, which is performed in the RAN, for the PDU session(s) for the S-NSSAI that are not available in the serving cell. The N2 message may include at least one of the PDU session ID(s), PDU session deactivation indicator, or a cause indicating slice unavailability according to configuration information.

For PDU session(s) for S-NSSAI not available in the serving cell, the RAN may transmit, to the AMF, an N2 message for notification of PDU session(s) for unavailable S-NSSAIs. The N2 message may include at least one of the PDU session ID(s) or an indicator indicating slice unavailability according to configuration information.

In operation 2a, the AMF may, upon receiving the message of operation 1 from the RAN, transmit a message including at least one of the following pieces of information to the SMF.
- PDU session ID(s) or SM context ID(s): at least one of the PDU session ID(s) or the corresponding SM context ID(s) included in the message received in operation 1 may be included.
- PDU session release indicator: this indicator may be included when the message received in operation 1 includes a PDU session deactivation indicator. Alternatively, this indicator may be included when the message received in operation 1 includes an indicator indicating slice unavailability and the AMF determines to release the PDU session.
- Operation type indicating PDU session deactivation: this information may be included when the message received in operation 1 includes a PDU session release indicator. Alternatively, this information may be included when the message received in operation 1 includes an indicator indicating slice unavailability and the AMF determines to deactivate the PDU session.
- Alternative S-NSSAI: when the AMF identifies that a PDU session is for an unavailable S-NSSAI based on information received in operation 1 (e.g., when the message received in operation 1 includes an indicator indicating slice unavailability, or when the message received in operation 1 includes a cause for the slice unavailability), the AMF may determine to switch the PDU session for the unavailable S-NSSAI to the alternative S-NSSAI. The alternative S-NSSAI may be included. The AMF may use the alternative S-NSSAI received from the NSSF or PCF.

In operation 2b, the SMF may transmit, to the AMF, a response message with respect to operation 2a.

In operation 3, the SMF may, depending on the message received from the AMF, include at least one of the following pieces of information in the message transmitted to the AMF.
- When the message received from the AMF includes a PDU session release indicator, the SMF may perform transmission by including at least one of the PDU session ID, N1 SM container (PDU session release command), or N2 SM container (N2 resource release request (PDU session ID)) in the message transmitted to the AMF. In addition, the SMF may perform, for the UPF, release for N4 resources corresponding to the PDU.
- When the message received from AMF includes a PDU session deactivation indicator, the SMF may perform transmission by including at least one of PDU session ID or N2 SM container (N2 resource release request (PDU session ID)) in the message transmitted to the AMF.
- When the message received from AMF includes the alternative S-NSSAI, the SMF may perform transmission by including at least one of the PDU session ID or N1 SM container (PDU session release command (alternative S-NSSAI)) in the message transmitted to the AMF. The alternative S-NSSAI may be transmitted by being included in a PDU session modification command or other command message.

In operation 4, the SMF may transmit a response message for operation 3 to the AMF.

In operation 5, the AMF may perform the following operations upon receiving the message of operation 3 from the SMF.
- When the message received from the SMF includes an N1 SM container, the AMF may transmit an N2 message obtained by including the PDU session ID and N1 SM container in the N1 message to the UE through the RAN.
- When the message received from the SMF includes an N2 SM container, the AMF may transmit an N2 message including the N2 SM container to the RAN.

In operation 6, when the N2 message exists in the message received from the AMF and the N2 message includes the N2 resource release request (PDU session ID), the RAN may release the RAN resource for the PDU session ID. Signaling with the UE for RAN resource release may be performed. When the N2 message received from the AMF includes the N1 message, the RAN may transmit the N1 message to the UE.

In operation 7, the remaining procedures for PDU session release or deactivation may be performed. The remaining procedures for releasing or deactivating the PDU session may include the same or similar procedures as the procedures for releasing or deactivating the PDU session in the existing LTE communication system or 5G communication system. However, the remaining procedures for releasing or deactivating the PDU session may be organically combined with the procedures of operations 1 to 6 above, and may further include new operations beyond the existing PDU session release or deactivation procedures.

In operation 8, when the PDU session ID and PDU session release command (alternative S-NSSAI) or PDU session modification command (alternative S-NSSAI) exist in the message received from the RAN, the UE may transmit a PDU session establishment request message including the alternative S-NSSAI and a DNN for the PDU session ID to the RAN. A new PDU session on the alternative S-NSSAI may be established through transmission of the PDU session establishment request message.

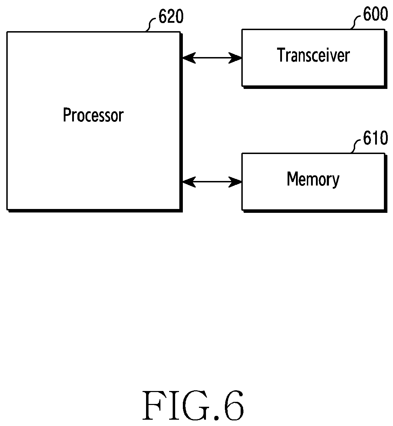

FIG. 6 is a block diagram illustrating the structure of a terminal (e.g., a UE), according to an embodiment.

Referring to FIG. 6, the UE may include a processor 620, a transceiver 600, and a memory 610. However, the components of the UE are not limited to the aforementioned examples. For example, the UE may include more or fewer components than the aforementioned components. Furthermore, the processor 620, the transceiver 600, and the memory 610 may be implemented on a single chip.

According to an embodiment, the processor 620 may control a series of processes such that the UE can operate according to the above-described embodiments. For example, the processor 620 may control components of the UE to perform a method of supporting network slice changes. The processor 620 may control components of the UE to perform embodiments by executing a program stored in the memory 610. In addition, the processor 620 may be an AP, a CP, a circuit, an application-specific circuit, or at least one processor.

According to an embodiment, the transceiver 600 may transmit and receive signals to and from a network entity, another UE, or a base station. The signals transmitted and received to and from the network entity, other UE, or base station may include control information and data. The transceiver 600 may include an RF transmitter that up-converts and amplifies the frequency of a transmitted signal, and an RF receiver that low-noise amplifies a received signal and down-converts the frequency thereof. However, components of the transceiver 600 are not limited to the RF transmitter and the RF receiver. Further, the transceiver 600 may receive signals through a radio channel, output the signals to the processor 620, and transmit signals output from the processor 620 through the radio channel.

According to an embodiment, the memory 610 may store programs and data required for operation of the UE. In addition, the memory 610 may store control information or data included in signals transmitted or received by the UE. The memory 610 may include a storage medium, such as a read only memory (ROM), a random access memory (RAM), hard disk, a compact disc (CD)-ROM, and a digital versatile disc (DVD), or a combination of storage media. Additionally, the memory 610 may have a plurality of memories. In addition, the memory 610 may store a program for performing the network slice change support method described above.

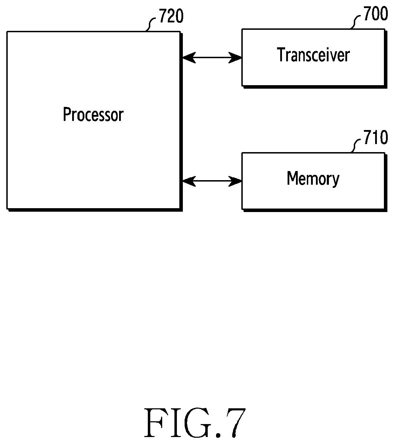

FIG. 7 is a block diagram illustrating a structure of a base station, according to an embodiment.

Referring to FIG. 7, the base station of the disclosure may include a processor 720, a transceiver 700, and a memory 710. However, the components of the base station are not limited to the aforementioned examples. For example, the base station may include more or fewer components than the aforementioned components. Furthermore, the processor 720, the transceiver 700, and the memory 710 may be implemented on a single chip.

The processor 720 may control a series of processes such that the base station can operate according to the above-described embodiments. For example, the processor 720 may control components of the base station to perform a method of supporting network slice changes according to the embodiments described above. The processor 720 may control components of the base station to perform the aforementioned embodiments by executing a program stored in the memory 710. The processor 720 may also be an AP, a CP, a circuit, an application-specific circuit, or at least one processor.

According to an embodiment, the transceiver 700 may transmit and receive signals to and from a network entity, another base station, or a UE. The signals transmitted and received to and from the network entity, other base station, or UE may include control information and data. The transceiver 700 may include an RF transmitter that up-converts and amplifies the frequency of a transmitted signal, and an RF receiver that low-noise amplifies a received signal and down-converts the frequency thereof. However, components of the transceiver 700 are not limited to the RF transmitter and the RF receiver. Further, the transceiver 700 may receive signals through a radio channel, output the signals to the processor 720, and transmit signals output from the processor 720 through the radio channel.

According to an embodiment, the memory 710 may store programs and data required for operation of the base station. In addition, the memory 710 may store control information or data contained in signals transmitted or received by the base station. The memory 710 may include a storage medium, such as, for example, a ROM, RAM, hard disk, CD-ROM, or DVD, or a combination of storage media. Further, the memory 710 may be a plurality of memories. Further, the memory 710 may store a program for performing the network slice change support method described above.

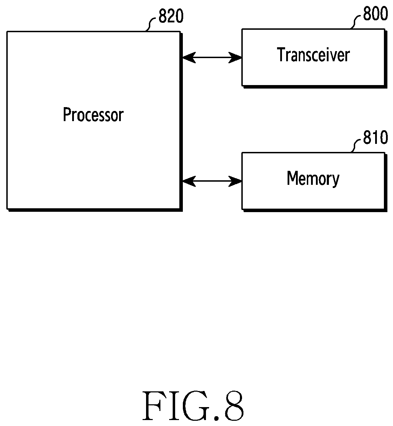

FIG. 8 is a block diagram illustrating a structure of a network entity, according to an embodiment.

Referring to FIG. 8, a network entity of the disclosure may include a processor 820, a transceiver 800, and a memory 810. However, the components of the network entity are not limited to the above examples. For example, the network entity may include more or fewer components than the aforementioned components. Furthermore, the processor 820, the transceiver 800, and the memory 810 may be implemented on a single chip. Furthermore, a network entity may refer to a NF, and the NF may include RAN, AMF, PCF, UDM, AF, NEF, UTM, and the like.

The processor 820 may control a series of processes such that the NF can operate according to the above described embodiments. For example, the processor 820 may control components of the network entity to perform a method of supporting network slice changes according to the embodiments described above. The processor 820 may control components of the NF to perform the aforementioned embodiments by executing a program stored in the memory 810. The processor 820 may also be an AP, a CP, a circuit, an application-specific circuit, or at least one processor.

According to an embodiment, the transceiver 800 may transmit and receive signals to and from other network entities, a base station, or a UE. The signals transmitted and received to and from the other network entities or UE may include control information and data. The transceiver 800 may include an RF transmitter that up-converts and amplifies the frequency of a transmitted signal, and an RF receiver that low-noise amplifies a received signal and down-converts the frequency thereof. However, the components of the transceiver 800 are not limited to the RF transmitter and RF receiver. The transceiver 800 may also receive signals through a radio channel, output the signals to the processor 820, and transmit the signals output from the processor 820 through the radio channel.

According to an embodiment, the memory 810 may store programs and data required for operation of the network entity. In addition, the memory 810 may store control information or data included in signals transmitted or received by the network entity. The memory 810 may include a storage medium, such as a ROM, RAM, hard disk, CD-ROM, and DVD, or a combination of storage media. Further, the memory 810 may be a plurality of memories. Further, the memory 810 may store a program for performing the network slice change support method described above.

It should be noted that the configuration diagrams, exemplary diagrams of control/data signal transmission and reception methods, and exemplary operation procedure diagrams illustrated in FIGS. 1 to 8 are not intended to limit the scope of the embodiments. That is, all components, entities, or operation stages depicted in FIGS. 1 to 8 should not be construed as being essential to practice the disclosure, and the disclosure may be implemented by including only some of the components without departing from the essence of the disclosure.

The above-described operations may be implemented by providing any unit of a device with a memory device storing corresponding program codes. That is, a controller of the device may perform the above-described operations by reading and executing the program codes stored in the memory device by means of a processor or CPU.

Various units or modules of an entity or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

The methods according to the embodiments may be implemented in software, hardware, or a combination of hardware and software.

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a ROM, an electrically erasable programmable ROM (EEPROM), a magnetic disc storage device, a CD-ROM, a DVD or other optical storage device, and a magnetic cassette. Alternatively, it may be stored to a memory combining part or all of those recording media. A plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments, the components included in the disclosure are expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

The embodiments are examples presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the embodiments may be employed in combination, as necessary. For example, a part of one embodiment may be combined with a part of another embodiment to operate a base station and a terminal. For example, a part of a first embodiment may be combined with a part of a second embodiment to operate a base station and a terminal. Furthermore, although the above embodiments have been presented based on the FDD LTE system, other variants based on the technical idea of the above embodiments may also be implemented in other systems such as TDD LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the scope of the invention defined in the claims.

## Claims

1. A method performed by a base station (125) in a wireless communication system, the method comprising:
identifying a protocol data unit, PDU, session associated with a network slice, based on first information on availability for at least one network slice;
performing deactivation of at least one user plane, UP, resource for the PDU session on single-network slice selection assistance information, S-NSSAI corresponding to the network slice, in case that a user equipment, UE, (100) moves from a first cell inside a network slice area of service, NS-AoS, to a second cell outside the NS-AoS, and the at least one UP resource is active for the PDU session, wherein the NS-AoS includes part of cells of a tracking area, TA; and
transmitting, to an access and mobility management function, AMF, entity (150), second information for requesting the deactivation of the at least one UP resource.

2. The method of claim 1,
wherein the first information is S-NSSAI location availability information, and
wherein the S-NSSAI location availability information includes location information indicating a plurality of cells of TAs associated with the network slice that is available.

3. The method of claim 1,
wherein an N2 message for a PDU session modification includes the second information.

4. The method of claim 3,
wherein the N2 message further includes at least one of an identifier, ID, of the PDU session or N2 session management, SM, information.

5. A method comprising:
receiving, by an access and mobility management function, AMF, entity (150) in a wireless communication system, from a base station (125), second information requesting deactivation of at least one user plane, UP, resource,
wherein a protocol data unit, PDU, session associated with a network slice is based on first information on availability for at least one network slice,
wherein the at least one UP resource for the PDU session on single-network slice selection assistance information, S-NSSAI corresponding to the network slice is deactivated , by the base station (125), in case that a user equipment, UE, (110) moves from a first cell inside a network slice area of service, NS-AoS, to a second cell outside the NS-AoS, and the at least one UP resource is active for the PDU session, and
wherein the NS-AoS includes part of cells of a tracking area, TA.

6. The method of claim 5,
wherein the first information is S-NSSAI location availability information, and
wherein the S-NSSAI location availability information includes location information indicating a plurality of cells of TAs associated with the network slice that is available.

7. The method of claim 5,
wherein an N2 message for a PDU session modification includes the second information.

8. The method of claim 7,
wherein the N2 message further includes at least one of an identifier, ID, of the PDU session or N2 session management, SM, information.

9. A base station (125) in a wireless communication system, the base station comprising:
a transceiver; and
at least one processor coupled with the transceiver and configured to:
identify a protocol data unit, PDU, session associated with a network slice, based on first information on availability for at least one network slice,
perform deactivation of at least one user plane, UP, resource for the PDU session on single-network slice selection assistance information, S-NSSAI corresponding to the network slice, in case that a user equipment, UE, (110) moves from a first cell inside a network slice area of service, NS-AoS, to a second cell outside the NS-AoS, and the at least one UP resource is active for the PDU session, wherein the NS-AoS includes part of cells of a tracking area, TA, and
transmit, to an access and mobility management function, AMF, entity (150), second information for requesting the deactivation of the at least one UP resource.

10. The base station (125) of claim 9,
wherein the first information is S-NSSAI location availability information, and
wherein the S-NSSAI location availability information includes location information indicating a plurality of cells of TAs associated with the network slice that is available.

11. The base station (125) of claim 9,
wherein an N2 message for a PDU session modification includes the second information.

12. The base station (125) of claim 11,
wherein the N2 message further includes at least one of an identifier, ID, of the PDU session, or N2 session management, SM, information.

13. A wireless communication system comprising an access and mobility management function, AMF, entity (150) and a base station (125), the AMF entity comprising:
a transceiver; and
at least one processor coupled with the transceiver and configured to:
receive, from the base station (125), second information requesting deactivation of at least one user plane, UP, resource,
wherein a protocol data unit, PDU, session associated with a network slice is based on first information on availability for at least one network slice,
wherein the at least one UP resource for the PDU session on single-network slice selection assistance information, S-NSSAI corresponding to the network slice is deactivated by the base station in case that a user equipment, UE, (110) moves from a first cell inside a network slice area of service, NS-AoS, to a second cell outside the NS-AoS, and the at least one UP resource is active for the PDU session, and
wherein the NS-AoS includes part of cells of a tracking area, TA.

14. The wireless communication system of claim 13,
wherein the first information is S-NSSAI location availability information, and
wherein the S-NSSAI location availability information includes location information indicating a plurality of cells of TA associated with the network slice that is available.

15. The wireless communication system of claim 13,
wherein an N2 message for a PDU session modification includes the second information.

## Patentansprüche

1. Verfahren, das von einer Basisstation (125) in einem drahtlosen Kommunikationssystem durchgeführt wird, wobei das Verfahren umfasst:
Identifizieren einer Protokolldateneinheits-, PDU, -Sitzung, die mit einem Netzwerkslice assoziiert ist, basierend auf erster Information über Verfügbarkeit für mindestens einen Netzwerkslice;
Durchführen von Deaktivierung mindestens einer Benutzerebene-, UP, -Ressource für die PDU-Sitzung anhand von einzelner Netzwerkslice-Auswahlunterstützungsinformation, S-NSSAI, die dem Netzwerkslice entspricht, falls sich ein Benutzergerät, UE, (100) von einer ersten Zelle innerhalb eines Netzwerkslice-Dienstgebiets, NS-AoS, in eine zweite Zelle außerhalb des NS-AoS bewegt und die mindestens eine UP-Ressource für die PDU-Sitzung aktiv ist, wobei das NS-AoS Teil von Zellen eines Trackingbereichs, TA, umfasst; und
Senden von zweiter Information zum Anfordern der Deaktivierung der mindestens einen UP-Ressource an eine Zugangs- und Mobilitätsverwaltungsfunktions-, AMF, -Einheit (150).

2. Verfahren nach Anspruch 1,
wobei es sich bei der ersten Information um S-NSSAI-Standortverfügbarkeitsinformation handelt, und
wobei die S-NSSAI-Standortverfügbarkeitsinformation Standortinformation umfasst, die eine Vielzahl von Zellen von TAs angibt, die mit dem verfügbaren Netzwerkslice assoziiert sind.

3. Verfahren nach Anspruch 1,
wobei eine N2-Nachricht für eine PDU-Sitzungsmodifikation die zweite Information enthält.

4. Verfahren nach Anspruch 3,
wobei die N2-Nachricht ferner mindestens eines von einer Kennung, ID, der PDU-Sitzung oder N2-Sitzungsverwaltungs-, SM, -Information enthält.

5. Verfahren, umfassend:
Empfangen von zweiter Information zum Anfordern von Deaktivierung mindestens einer Benutzerebene-, UP, -Ressource von einer Basisstation (125), durch eine Zugangs- und Mobilitätsverwaltungsfunktions-, AMF, -Einheit (150) in einem drahtlosen Kommunikationssystem,
wobei eine Protokolldateneinheits-, PDU, -Sitzung, die mit einem Netzwerkslice assoziiert ist, auf erster Information über Verfügbarkeit für mindestens einen Netzwerkslice basiert,
wobei die mindestens eine UP-Ressource für die PDU-Sitzung anhand von einzelner Netzwerkslice-Auswahlunterstützungsinformation, S-NSSAI, die dem Netzwerkslice entspricht, durch die Basisstation (125) deaktiviert wird,
falls sich ein Benutzergerät, UE, (110) von einer ersten Zelle innerhalb eines Netzwerkslice-Dienstgebiets, NS-AoS, in eine zweite Zelle außerhalb des NS-AoS bewegt und die mindestens eine UP-Ressource für die PDU-Sitzung aktiv ist, und
wobei das NS-AoS Teil von Zellen eines Trackingbereichs, TA, umfasst.

6. Verfahren nach Anspruch 5,
wobei es sich bei der ersten Information um S-NSSAI-Standortverfügbarkeitsinformation handelt, und
wobei die S-NSSAI-Standortverfügbarkeitsinformation Standortinformation umfasst, die eine Vielzahl von Zellen von TAs angibt, die mit dem verfügbaren Netzwerkslice assoziiert sind.

7. Verfahren nach Anspruch 5,
wobei eine N2-Nachricht für eine PDU-Sitzungsmodifikation die zweite Information enthält.

8. Verfahren nach Anspruch 7,
wobei die N2-Nachricht ferner mindestens eines von einer Kennung, ID, der PDU-Sitzung oder N2-Sitzungsverwaltungs-, SM, -Information enthält.

9. Basisstation (125) in einem drahtlosen Kommunikationssystem, wobei die Basisstation umfasst:
einen Transceiver; und
mindestens einen Prozessor, der mit dem Transceiver gekoppelt und dazu konfiguriert ist:
eine Protokolldateneinheits-, PDU, -Sitzung, die mit einem Netzwerkslice assoziiert ist, basierend auf erster Information über Verfügbarkeit für mindestens einen Netzwerkslice zu identifizieren,
Deaktivierung mindestens einer Benutzerebene-, UP, -Ressource für die PDU-Sitzung anhand von einzelner Netzwerkslice-Auswahlunterstützungsinformation, S-NSSAI, die dem Netzwerkslice entspricht, durchzuführen, falls sich ein Benutzergerät, UE, (110) von einer ersten Zelle innerhalb eines Netzwerkslice-Dienstgebiets, NS-AoS, in eine zweite Zelle außerhalb des NS-AoS bewegt und die mindestens eine UP-Ressource für die PDU-Sitzung aktiv ist, wobei das NS-AoS Teil von Zellen eines Trackingbereichs, TA, umfasst; und
an eine Zugangs- und Mobilitätsverwaltungsfunktions-, AMF, -Einheit (150) zweite Information zum Anfordern der Deaktivierung der mindestens einen UP-Ressource zu senden.

10. Basisstation (125) nach Anspruch 9,
wobei es sich bei der ersten Information um S-NSSAI-Standortverfügbarkeitsinformation handelt, und
wobei die S-NSSAI-Standortverfügbarkeitsinformation Standortinformation umfasst, die eine Vielzahl von Zellen von TAs angibt, die mit dem verfügbaren Netzwerkslice assoziiert sind.

11. Basisstation (125) nach Anspruch 9,
wobei eine N2-Nachricht für eine PDU-Sitzungsmodifikation die zweite Information enthält.

12. Basisstation (125) nach Anspruch 11,
wobei die N2-Nachricht ferner mindestens eines von einer Kennung, ID, der PDU-Sitzung oder N2-Sitzungsverwaltungs-, SM, -Information enthält.

13. Drahtloses Kommunikationssystem, umfassend eine Zugangs- und Mobilitätsverwaltungsfunktions-, AMF, -Einheit (150) und eine Basisstation (125),
wobei die AMF-Einheit umfasst:
einen Transceiver; und
mindestens einen Prozessor, der mit dem Transceiver gekoppelt und dazu konfiguriert ist:
von der Basisstation (125) zweite Information zu empfangen, die eine Deaktivierung mindestens einer Benutzerebene-, UP, -Ressource anfordert,
wobei eine Protokolldateneinheits-, PDU, -Sitzung, die mit einem Netzwerkslice assoziiert ist, auf erster Information über Verfügbarkeit für mindestens einen Netzwerkslice basiert,
wobei die mindestens eine UP-Ressource für die PDU-Sitzung anhand von einzelner Netzwerkslice-Auswahlunterstützungsinformation, S-NSSAI, die dem Netzwerkslice entspricht, durch die Basisstation deaktiviert wird,
falls sich ein Benutzergerät, UE, (110) von einer ersten Zelle innerhalb eines Netzwerkslice-Dienstgebiets, NS-AoS, in eine zweite Zelle außerhalb des NS-AoS bewegt und die mindestens eine UP-Ressource für die PDU-Sitzung aktiv ist, und
wobei das NS-AoS Teil von Zellen eines Trackingbereichs, TA, umfasst.

14. Drahtloses Kommunikationssystem nach Anspruch 13,
wobei es sich bei der ersten Information um S-NSSAI-Standortverfügbarkeitsinformation handelt, und
wobei die S-NSSAI-Standortverfügbarkeitsinformation Standortinformation umfasst, die eine Vielzahl von Zellen von TA angibt, die mit dem verfügbaren Netzwerkslice assoziiert ist.

15. Drahtloses Kommunikationssystem nach Anspruch 13,
wobei eine N2-Nachricht für eine PDU-Sitzungsmodifikation die zweite Information enthält.

## Revendications

1. Procédé exécuté par une station de base (125) dans un système de communication sans fil, le procédé comprenant :
identifier une session d'unité de données de protocole, PDU, associée à une tranche de réseau, sur la base d'une première information sur une disponibilité d'au moins une tranche de réseau ;
effectuer une désactivation d'au moins une ressource de plan utilisateur, UP, pour la session PDU sur une information d'assistance à sélection de mono-tranche de réseau, S-NSSAI, correspondant à la tranche de réseau, dans le cas où un équipement utilisateur, UE, (100) se déplace d'une première cellule à l'intérieur d'une zone de tranche de réseau de service, NS-AoS, vers une seconde cellule en dehors de la NS-AoS, et ladite au moins une ressource UP est active pour la session PDU, la NS-AoS incluant une partie des cellules d'une zone de suivi, TA ; et
transmettre, à une entité de fonction d'accès et de gestion de mobilité, AMF (150), une seconde information pour demander la désactivation de ladite au moins une ressource UP.

2. Procédé selon la revendication 1,
dans lequel la première information est une information sur disponibilité de localisation S-NSSAI, et
dans lequel l'information sur disponibilité de localisation S-NSSAI inclut une information de localisation indiquant qu'une pluralité de cellules de TA associées à la tranche de réseau sont disponibles.

3. Procédé selon la revendication 1,
dans lequel un message N2 pour une modification de session PDU inclut la seconde information.

4. Procédé selon la revendication 3,
dans lequel le message N2 inclut en outre au moins l'un d'un identifiant, ID, de la session PDU ou d'une information de gestion de session, SM, N2.

5. Procédé comprenant :
recevoir, par une entité de fonction d'accès et de gestion de mobilité, AMF (150) dans un système de communication sans fil, depuis une station de base (125), une seconde information demandant une désactivation d'au moins une ressource de plan utilisateur, UP,
dans lequel une session d'unité de données de protocole, PDU, associée à une tranche de réseau est basée sur une première information sur une disponibilité d'au moins une tranche de réseau,
dans lequel ladite moins une ressource UP pour la session PDU sur une information d'assistance à sélection de mono-tranche de réseau, S-NSSAI, correspondant à la tranche de réseau est désactivée, par la station de base (125),
dans le cas où un équipement utilisateur, UE, (110) se déplace d'une première cellule à l'intérieur d'une zone de tranche de réseau de service, NS-AoS, vers une seconde cellule en dehors de la NS-AoS, et ladite au moins une ressource UP est active pour la session PDU, et
dans lequel la NS-AoS inclut une partie des cellules d'une zone de suivi, TA.

6. Procédé selon la revendication 5,
dans lequel la première information est une information sur disponibilité de localisation S-NSSAI, et
dans lequel l'information sur disponibilité de localisation S-NSSAI inclut une information de localisation indiquant qu'une pluralité de cellules de TA associées à la tranche de réseau sont disponibles.

7. Procédé selon la revendication 5,
dans lequel un message N2 pour une modification de session PDU inclut la seconde information.

8. Procédé selon la revendication 7,
dans lequel le message N2 inclut en outre au moins l'un d'un identifiant, ID, de la session PDU ou d'une information de gestion de session, SM, N2.

9. Station de base (125) dans un système de communication sans fil, la station de base comprenant :
un émetteur-récepteur ; et
au moins un processeur couplé à l'émetteur-récepteur et configuré pour :
identifier une session d'unité de données de protocole, PDU, associée à une tranche de réseau, sur la base d'une première information sur une disponibilité d'au moins une tranche de réseau,
effectuer une désactivation d'au moins une ressource de plan utilisateur, UP, pour la session PDU sur une information d'assistance à sélection de mono-tranche de réseau, S-NSSAI, correspondant à la tranche de réseau, dans le cas où un équipement utilisateur, UE, (110) se déplace d'une première cellule à l'intérieur d'une zone de tranche de réseau de service, NS-AoS, vers une seconde cellule en dehors de la NS-AoS, et ladite au moins une ressource UP est active pour la session PDU, la NS-AoS incluant une partie des cellules d'une zone de suivi, TA, et
transmettre, à une entité de fonction d'accès et de gestion de mobilité, AMF (150), une seconde information pour demander la désactivation de ladite au moins une ressource UP.

10. Station de base (125) selon la revendication 9,
dans laquelle la première information est une information sur disponibilité de localisation S-NSSAI, et
dans laquelle l'information sur disponibilité de localisation S-NSSAI inclut une information de localisation indiquant qu'une pluralité de cellules de TA associées à la tranche de réseau sont disponibles.

11. Station de base (125) selon la revendication 9,
dans laquelle un message N2 pour une modification de session PDU inclut la seconde information.

12. Station de base (125) selon la revendication 11,
dans laquelle le message N2 inclut en outre au moins l'un d'un identifiant, ID, de la session PDU ou d'une information de gestion de session, SM, N2.

13. Système de communication sans fil comprenant une entité de fonction d'accès et de gestion de mobilité, AMF (150) et une station de base (125),
l'entité AMF comprend :
un émetteur-récepteur ; et
au moins un processeur couplé à l'émetteur-récepteur et configuré pour :
recevoir, depuis une station de base (125), une seconde information demandant une désactivation d'au moins une ressource de plan utilisateur, UP,
dans lequel une session d'unité de données de protocole, PDU, associée à une tranche de réseau est basée sur une première information sur une disponibilité d'au moins une tranche de réseau,
dans lequel ladite moins une ressource UP pour la session PDU sur une information d'assistance à sélection de mono-tranche de réseau, S-NSSAI, correspondant à la tranche de réseau est désactivée, par la station de base,
dans le cas où un équipement utilisateur, UE, (110) se déplace d'une première cellule à l'intérieur d'une zone de tranche de réseau de service, NS-AoS, vers une seconde cellule en dehors de la NS-AoS, et ladite au moins une ressource UP est active pour la session PDU, et
dans lequel la NS-AoS inclut une partie des cellules d'une zone de suivi, TA.

14. Système de communication sans fil selon la revendication 13,
dans lequel la première information est une information sur disponibilité de localisation S-NSSAI, et
dans lequel l'information sur disponibilité de localisation S-NSSAI inclut une information de localisation indiquant qu'une pluralité de cellules de TA associées à la tranche de réseau sont disponibles.

15. Système de communication sans fil selon la revendication 13,
dans lequel un message N2 pour une modification de session PDU inclut la seconde information.
